# EUROPEAN PATENT SPECIFICATION

(11) **EP 1 340 631 B1**
(45) Date of publication and mention of the grant of the patent: **01.06.2005**
(21) Application number: 02013598.4
(22) Date of filing: 20.06.2002
(51) Int. Cl.: B60D 1/62

(54) **A trolley to carry a connecting board**
Wagen zum Tragen von einer Verbindungsplatte
Chariot permettant de porter une plaque de connexion

(30) Priority: 27.02.2002 ES 200200467 U
(43) Date of publication of application: 03.09.2003
(73) Proprietor: Miro Bravo, Vicente, 03800 Alcoy (Alicante) (ES)
(72) Inventor: Miro Bravo, Vicente, 03800 Alcoy (Alicante) (ES)
(74) Representative: Isern Jara, Nuria

(56) References cited:
- EP-A- 0 853 033
- EP-A- 1 040 988
- US-A- 4 037 730
- US-A- 5 711 228
- US-B1- 6 202 831

## Description

### FIELD OF THE INVENTION

The present invention refers to a trolley to carry a connecting board for truck trailers and semi-trailers, incorporating significant innovations and advantages with regards the present connecting boards used in trailers and semi-trailers.

More specifically, a trolley carrying a connection board of the kind used in articulated vehicles for the linkage of service and energy ducts between the tractor and the trailer or semi-trailer is described. Said trolley is formed by a device designed to move on two transverse guides located in the front part of a trailer or a semi-trailer.

The trolley to be described is especially appropriate for avoiding excessive pulls and pinchings in compressed air ducts and electric cables as the tractor forms an angle of a certain magnitude in relation to the longitudinal axle of the trailer or semi-trailer.

In addition, said trolley, with its side displacement, facilitates the connecting and disconnecting of the above mentioned ducts and cables.

### BACKGROUND OF THE INVENTION

In an articulated transport vehicle there are a number of air ducts and electric cables between the tractor and the trailer or semi-trailer. A connecting board is located in the front part of the trailer, centralizing pressurized air connections for brakes and other devices and electrical connections for signalling systems. Additional connections may exist, such as electrical cables for energy supplies and similar uses.

Said ducts and cables are subject to open weather conditions and to many flexion and compression stresses between the tractor and the semi-trailer. Said actions are increased when in a manoeuvre the tractor takes an important angle in relation to the longitudinal axle of the trailer.

In said cases, ducts and cables are stretched and possibly damaged. Above all, air outlets and intakes in the connecting board suffer from an important side drawing.

Additionally, a problem exists with the connection and disconnection of the cited ducts when a trailer or a semi-trailer is coupled to a tractor, because the available working space is small and uncomfortable. This is especially true in the case of refrigerated semi-trailers, as the operator has to get to the upper part of the tractor body to handle ducts and cables, just in a space where the refrigerating unit is located, so the connecting operation is complex and hard.

In response to the above mentioned draw-backs, the prior art has proposed several solutions including automatic coupling systems. Most of them, as per patent WO 91/11338, a movable coupling system is provided in the front part of the semi-trailer. These couplings show, as the main feature, a board located on an articulated mounting, as per patent WO 94/26542, or a transverse track or guide for displacement, as per cited patent WO 91/11338 and U.S. patent no. 3.888.513.

### DESCRIPTION OF THE INVENTION

The trolley forming the subject matter of this invention is it described in claim 1.

Said devices offer improved connecting conditions for users and a strong structure, thus allowing a more dynamic and durable use and a low level of wear and noise.

In fact, the trolley according to the invention comprises a connecting board including outlets and intakes corresponding to ducts and tubes coming from the tractor. Said board extends rearwards in an upper bracket or support and a lower bracket or support, both mounted on two parallel profiles transversely located in the front part of the trailer or semi-trailer.

Novelty in this invention consists of the coupling of brackets or supports to profiles, as well as the proper profiles. Each bracket is mounted on the external side of a profile according to a transverse direction, the two brackets externally covering both profiles.

Each profile is T-shaped, with its end elbowed to define an anchoring rim to the body of the trailer or semi-trailer, to which it is directly fixed.

The rest of the board support on the guiding profiles is made by two sets of ball-bearings defining a secure stay. Each set is formed by two vertical-axle bearings facing the other set. A wing of each profile is comprised between the bearings of a set. Another ball bearing with its axle horizontal rests on the central, horizontal part of the profile. This arrangement ensures a highly smooth motion on the profiles, resulting in their long duration.

The lower bracket or support shows its set of bearings in an inverted position in relation to the upper bracket, since the lower profile is inverted with respect to the upper profile.

The board according to this invention slides on the four sets of ball bearings facing each other. Said bearings adequately withstand side and pulling stresses possibly applied on the board. Also, the whole weight is supported by the horizontal-axle bearings leaning on the upper profile, and said weight being rather low allows a smooth displacement. The horizontal-axle bearings leaning on the lower profile ensure the adequate position of the board on both profiles.

The open shape of the profiles allows its easy cleaning and low maintenance. The array conditions of outlets and intakes on the connecting board bring about its size and therefore the distance between both profiles defining the guiding of the device.

The connections of ducts leading to outlets and intakes on the board extend in pipes forming a manifold located in the space defined by both profiles.

In order to complete the following description and to allow a better understanding of the features of the invention, a set of drawings is appended hereto, illustrating in an exemplary and non-limitative way the most relevant aspects of the invention.

### BRIEF DESCRIPTION OF THE DRAWINGS

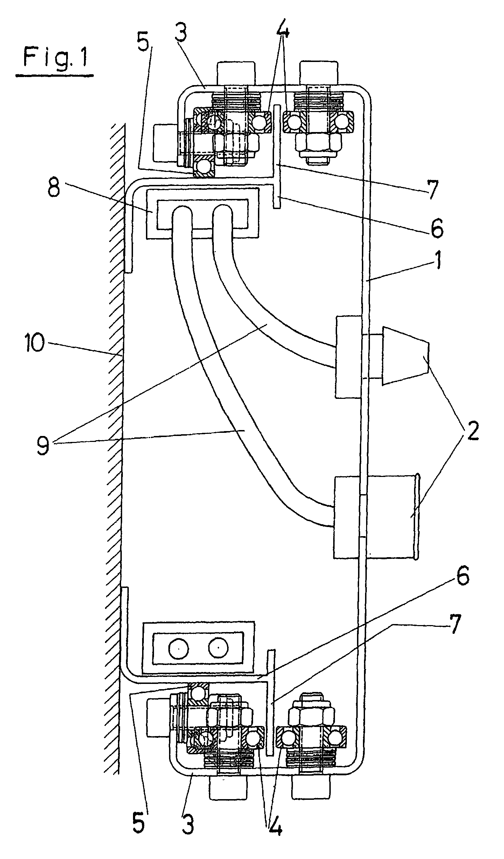

Figure 1 is a transverse cross-section view of the device according to the invention.

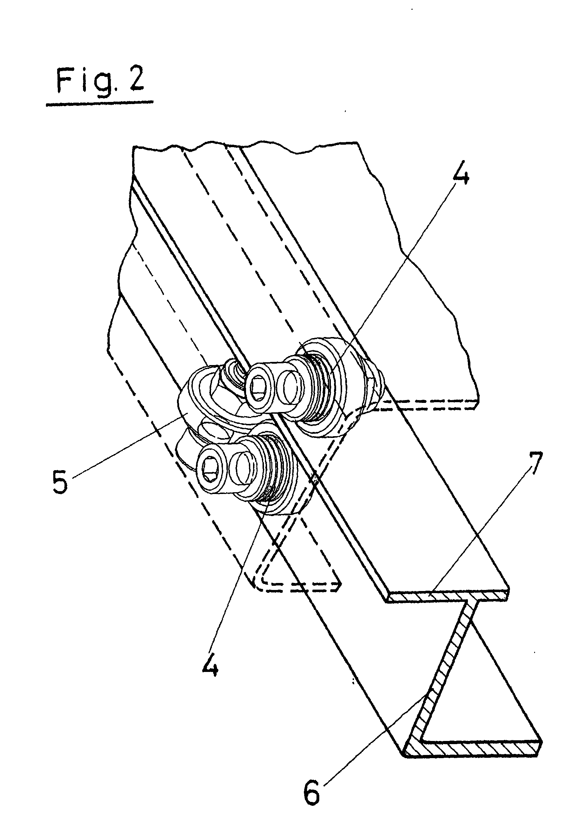

Figure 2 is a prospective view of a particular set of ball bearings.

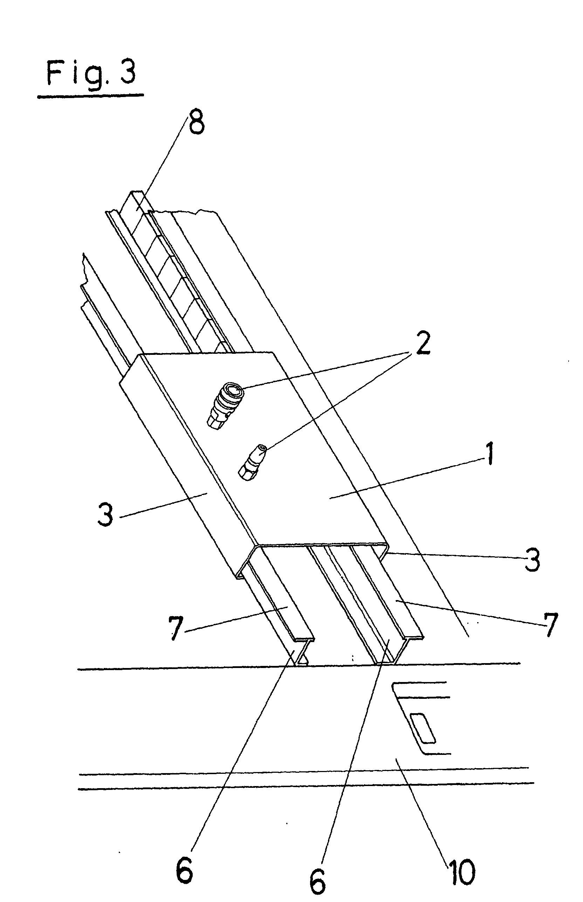

Figure 3 is a prospective view of the whole structure of the device.

### DESCRIPTION OF A PREFERRED EMBODIMENT

In view of the above mentioned drawings and according to the adopted numbering, a preferred but non-limitative embodiment of the invention is shown, consisting of a trolley mounted on two straight, transverse profiles (6) fixed to the front part of a trailer (10) or semi-trailer.

Each profile (6) is laid-flat T-shaped, with its central, horizontal stretch bent in right angle towards the other profile.

The trolley is formed by an exterior panel (1) extended in two transverse, parallel supports (3), in whole defining a laid-flat U rearwards. Each bracket or support (3) holds two sets of ball bearings (4, 5) mounted in the ends and applied against a profile.

Each set of bearings is formed by two vertical-axle units (4) mounted on a horizontal support (3) and touching both sides of the wing (7) of the profile (6).

In turn, each support (3) shows its inside edge bent inwards, defining a lodging for a third ball bearing (5) horizontally oriented and applied against the outside side of the central part of the profile (6) helping the longitudinal displacement of the trolley.

Panel (1) shows in its external side the outlets and intakes (2) to be connected with pipes coming from the tractor. These outlets and intakes extend afterwards in a manifold of ducts (9) lodged in an articulated chain (8) laid flat between the profiles (6) of the device.

## Claims

1. A trolley to carry a connecting board, designed for holding outlets and intakes (2) to connect air and electrical ducts in order to mount said trolley in a transverse guide on the front part of a trailer (10) or a semi-trailer, ***characterised* by** the fact that it comprises a front panel (1) extended in its upper and lower parts in two transverse, parallel supports (3) defining as a whole a laid flat U at the rear, each of said supports (3) holding two sets of ball bearings (4, 5) externally located in relation to a respective profile (6) forming the guide for the device.

2. A trolley to carry a connecting board, according to claim 1, **characterised by** the fact that the guide system consists of two opposed profiles (6) with a laid-flat T shape cross-section, transversely oriented and with the central, horizontal stretch bent in right angle, and in that each of the profiles (6) is straight.

3. A trolley to carry a connecting board, according to claims 1 and 2, **characterised in that** each support (3) holds two sets of three ball bearings (4, 5) in their ends respectively, said sets of bearings being transversely apart and externally mounted on the respective support (6) forming the guiding system.

4. A trolley to carry a connecting board, according to claims 1 to 3, **characterised in that** the ball bearings of each set (4, 5) comprises two bearings (4) vertically oriented and mounted on the horizontal stretch of support (3), aligned in parallel and holding between them a wing (7) integral to the profile,
and **in that** the ball bearings of each set (4, 5) comprises a third bearing (5) horizontally oriented and applied against the external side of the respective profile (6), adequately adapted to run along the full length of said side,
and **in that** the rear edge of each support (3) is bent inwards the assembly, defining the support of bearings (5).

## Patentansprüche

1. Beweglicher Schlitten mit einem mit Ein- und Ausgängen (2) versehenen Anschlussfeld zum Anschließen von Luft oder elektrischen Leitungen, um den Schlitten an einer Querführung auf der Frontseite eines Anhängers (10) oder Sattelanhängers zu befestigen, **dadurch gekennzeichnet, dass** der Schlitten aus einem Frontpanel (1) besteht, welches sich oben und unten in zwei parallelen Querträgern (3) fortsetzt und somit insgesamt ein im oberen Teil abgeflachtes U beschreibt, wobei jeder dieser Querträger (3) zwei Kugellagereinheiten (4, 5) trägt, die im Bezug auf ein entsprechendes, die Führung der Einrichtung bildendes Profil (6) außen liegen.

2. Beweglicher Schlitten mit einem Anschlussfeld nach Anspruch 1, **dadurch gekennzeichnet, dass** das Führungssystem aus zwei einander gegenüber liegenden Profilen (6) besteht, deren Querschnitt die Form eines abgeflachten, quer ausgerichteten T aufweist, dessen horizontaler Mittelteil in einem rechten Winkel abgebogen ist, und dass jedes Profil (6) gerade ist.

3. Beweglicher Schlitten mit einem Anschlussfeld nach den Ansprüchen 1 und 2, **dadurch gekennzeichnet, dass** jeder Träger (3) zwei aus je drei Kugellagern gebildete Lagereinheiten (4, 5) in entsprechender Weise an seinen Enden trägt, wobei die Lagersätze transversal voneinander getrennt angebracht und außen auf dem entsprechenden, das Führungssystem bildenden Träger (6) montiert sind.

4. Beweglicher Schlitten mit einem Anschlussfeld nach den Ansprüchen 1 bis 3, **dadurch gekennzeichnet, dass** die Kugellager jeder Lagereinheit (4, 5) aus zwei vertikal ausgerichteten und auf dem horizontalen Abschnitt des Trägers (3) montierten Lagern (4) bestehen, die parallel angeordnet sind und dazwischen einen zum Profil gehörenden Flügel (7) tragen,
dass die Kugellager jeder Lagereinheit (4, 5) ein drittes, horizontal ausgerichtetes und auf der Außenseite des entsprechenden Profils (6) angebrachtes Lager (5) umfassen, das in geeigneter Weise zum Verschieben über die gesamte Länge dieser Führung adaptiert ist, und
dass der hintere Rand jedes Trägers (3) nach innen zur Einheit hin gebogen ist, und so den Träger für die Lager (5) bildet.

## Revendications

1. Chariot mobile portant un panneau de connexions, conçu pour supporter des sorties et des entrées (2) prévues pour le branchement d'air et de conducteurs électriques à fin de monter ledit chariot sur un guide transversal à l'avant d'une remorque (10) ou d'une semi-remorque, **caractérisé en ce qu'**il comprend un panneau avant (1) dont les parties supérieure et inférieure sont prolongées par deux supports transversaux parallèles (3) qui définissent dans leur ensemble un U aplati dans le haut, chacun desdits supports supportant (3) deux ensembles de roulements à billes (4, 5) situés extérieurement par rapport au profilé correspondant (6) formant le guide du dispositif.

2. Chariot mobile portant un panneau de connexions, suivant la revendication 1, **caractérisé en ce que** le système de guidage consiste en deux profilés opposés entre eux (6), dont la section transversale prend la forme d'un T aplati, orienté transversalement et pourvu d'un élément central, horizontal, plié en angle droit, et **en ce que** chacun des profilés (6) est droit.

3. Chariot mobile portant un panneau de connexions, suivant les revendications 1 et 2, **caractérisé en ce que** chacun des supports (3) supporte deux ensembles constitués de trois roulements à billes (4, 5) chacun à une extrémité, dont les jeux de roulements sont séparés transversalement entre eux et montés extérieurement sur le support correspondant (6) formant ainsi le système de guidage.

4. Chariot mobile portant un panneau de connexions, suivant les revendications 1 à 3, **caractérisé en ce que** les roulements à billes de chaque ensemble (4, 5) comportent deux roulements (4) orientés verticalement et montés sur l'élément horizontal du support (3), alignés en parallèle et supportant entre eux une aile (7) intégrale avec le profilé,
et **en ce que** les roulements à billes de chaque ensemble (4, 5) comportent un troisième roulement (5) orienté horizontalement et plaqué contre le côté extérieur du profilé correspondant (6), adapté de façon à en permettre le déplacement sur toute la longueur dudit guide,
et **en ce que** le bord postérieur de chaque support (3) est plié vers l'intérieur de l'ensemble, définissant ainsi le support des roulements (5).
